Europäisches Patentamt

European Patent Office

Office européen des brevets

(19)

(11) Numéro de publication : **0 231 180 B1**

(12) **FASCICULE DE BREVET EUROPÉEN**

(45) Date de publication du fascicule du brevet :
**11.10.89**

(21) Numéro de dépôt : **85904822.5**

(22) Date de dépôt : **25.09.85**

(86) Numéro de dépôt international :
**PCT/FR 85/00261**

(87) Numéro de publication internationale :
**WO/8601979 (10.04.86 Gazette 86/08)**

(51) Int. Cl.⁴ : **A 01 K 87/00, B 25 G 1/10**

(54) **POIGNEE ANATOMIQUE.**

(30) Priorité : **01.10.84 FR 8415142**

(43) Date de publication de la demande :
**12.08.87 Bulletin 87/33**

(45) Mention de la délivrance du brevet :
**11.10.89 Bulletin 89/41**

(84) Etats contractants désignés :
**BE CH DE GB IT LI NL SE**

(56) Documents cités :
**DE--A-- 2 538 590
DE--B-- 2 634 656
US--A-- 2 205 769
Connaissance de la Pèche, No. 75, Déc. 1984, p. 10,
'nouveautés'**

(73) Titulaire : **CAMACHO, Angel
19, Grand'Rue
Cuffies F-02200 Soissons (FR)**

**CAMACHO, Serge
1, rue de Laon
Crouy F-02200 Soissons (FR)**

(72) Inventeur : **CAMACHO, Angel
19, Grand'Rue
Cuffies F-02200 Soissons (FR)**
Inventeur : **CAMACHO, Serge
1, rue de Laon
Crouy F-02200 Soissons (FR)**

(74) Mandataire : **Lhuillier, René et al
ARMENGAUD JEUNE CABINET LEPEUDRY 6, rue du
Fg. St-Honoré
F-75008 Paris (FR)**

Jouve, 18, rue St-Denis, 75001 Paris, France

## Description

La présente invention s'applique en premier lieu aux poignées de cannes à pêche et plus spécialement aux pêches sportives telles que fouets, lancers légers, lancers de mer, pêche aux coups. Notre procédé consiste à appliquer directement sur la poignée des cannes un moulage s'adaptant parfaitement à la forme de main de chaque utilisateur.

Il est connu qu'on peut personnaliser les poignées des cannes à pêche par des procédés très simples.

Le plus simple de ceux-ci est un procédé artisanal sur structure en bois travaillée et poncée.

Un autre procédé, le procédé industriel, concerne la fabrication des cannes par enrobage de masse plastique moulée à chaud en dispositions succintes. Cependant, les inconvénients de la lourdeur et la rigidité pour le bois, l'échauffement et la transpiration demeurent.

Dans le document US 2 205 769, il est présenté un instrument pour poignées de canne à pêche, par exemple, ou d'autres types de poignées, et son procédé de fabrication. Celui-ci est obtenu par une première étape d'encollage de la poignée, puis l'utilisation d'un produit plastifiable avec un liant qu'on étend autour de la poignée, suivie par une empreinte de la main et, enfin, un séchage de la poignée.

Cependant les problèmes de la transpiration et de l'échauffement demeurent.

La poignée anatomique composée essentiellement de liège et de liant, permet d'éviter ces inconvénients tout en entraînant un surplus de poids minime de l'ordre de 10 à 15 grammes et en apportant un confort considérable et une facilité de réalisation par n'importe quel pêcheur, à partir de n'importe quelle canne du commerce.

Le procédé se présente sous la forme d'un kit de réalisation prêt à l'emploi comprenant cinq sachets plastiques assemblés par thermocollage, contenant séparément les composants et mentionnés comme suit : un sachet, format 150 mm × 150 mm, de 156, 25 ml de liège finement broyé calibre 0, 03, 0, 02, 0, 01, soit 62,43 % avec adjonction de 25 ml d'alginate pour empreinte de ZALGAN 2000 (marque déposée) soit 9,99 %, un sachet format 150 mm × 100 mm, de 51 ml de colle vinylique de type SADER (marque déposée) A 22 CTB G72/45 2446, soit 20,38 % additionnée de 18 ml d'eau soit 7,19 %, un sachet demi format contenant un produit de finition qui peut être du liège en poudre, du feutre, du flocke et deux sachets, quart de format, contenant les produits d'encollage du moulage et du produit de finition. Les deux principaux sachets (liège plus liant) sont séparés par un clip en plastique qui s'enlève lors de l'emploi pour ne former qu'un seul grand sachet afin d'amalgamer par pétrissage les deux produits. L'exécution du moulage se déroule comme suit : avec le sachet quart de format prévu à cet effet, encoller la poignée de la canne à pêche destinée à être équipée d'une poignée anatomique, ensuite après avoir pétri cinq minutes le grand sachet contenant l'amalgame, couper un coin et étendre le produit obtenu sur une surface plane en plastique quelconque sur une dimension de la hauteur de la poignée. Hacher l'amalgame avec un instrument quelconque afin qu'il ne soit pas en contact uniforme avec la surface plastique. Prendre la poignée de canne à pêche et la rouler sur l'amalgame aux fins d'adhérence. On obtient ainsi un enrobage de la poignée sur lequel on empreinte sa main de la façon la plus naturelle qui soit pour une prise en main efficace et confortable. Avec le surplus d'amalgame restant sur la surface plastique, on façonne le contour des doigts et de la paume de la main de façon uniforme et harmonieuse, on retire délicatement sa main et on laisse sécher dans l'état. Après séchage, on réalise la finition comme suit : avec le sachet quart de format prévu à cet effet, on encolle la poignée anatomique et on saupoudre le produit de finition qui peut être plus ou moins décoratif selon le matériau choisi, le coloris unique ou deux tons pour contraster le relief. Telle qu'elle est réalisée, la poignée anatomique présente les avantages suivants : un confort incontestable de tenue en main grâce à la forme anatomique, s'adaptant parfaitement à la morphologie de chaque utilisateur. On évite ainsi l'échauffement et la tétanisation des muscles en cas de pêche intensive ou de station prolongée dans la même position. D'autre part, le matériau utilisé en l'occurrence le liège isole du froid en hiver et empêche la transpiration en été. Enfin l'utilisateur acquiert avec ce procédé un matériel personnalisé à son goût et à sa tactique de pêche. L'extension du procédé peut se faire à d'autres domaines de loisirs et de sport, tel que poignées d'armes de tir, arcs, bâtons de ski, javelots et perches. Enfin, une application très intéressante peut être envisagée dans le domaine orthopédique, en particulier pour les handicapés des mains et des doigts qui trouveront là une solution sécurisante et confortable à tous leurs problèmes de prise en mains.

## Revendications

1. Procédé de réalisation d'un moulage sur une poignée encollée au préalable, d'un ustensile, notamment une canne à pêche, une arme de tir, un appareil de sport, un appareil orthopédique, en utilisant un amalgame constitué d'un produit plastifiable et d'un liant, lequel moulage s'opère sous la pression de la main et présente donc l'empreinte exacte de celle-ci, caractérisé en ce que :

le produit plastifiable est du liège finement divisé qui est mis en présence d'un liant, puis pétri,

on étend l'amalgame liège et liant ainsi obtenu sur un support en une bande de hauteur égale à celle du moulage,

par roulement de la poignée encollée sur l'amalgame, on fait adhérer l'amalgame jusqu'à enrober la poignée avant d'assurer l'empreinte de la main dans l'enrobage.

2. Procédé selon la revendication 1 caractérisé en ce que, en plus du liège et du liant, on pétrit de l'alginate pour empreinte.

3. Procédé selon la revendication 1 ou 2, caractérisé en ce qu'avant le roulement de la poignée encollée sur l'amalgame, par hachage, on rompt le contact uniforme de celui-ci sur son support.

4. Procédé selon l'une quelconque des revendications 1 à 3, caractérisé en ce que, avec le surplus d'amalgame on façonne des contours tels ceux des doigts et de la paume de la main.

5. Procédé selon l'une quelconque des revendications 1 à 4, caractérisé en ce que, après séchage, on encolle l'amalgame puis on saupoudre un produit de finition.

6. Moyens pour la mise en œuvre du procédé de la revendication 1, caractérisé en ce qu'ils sont constitués d'un kit comprenant des sachets contenant, respectivement, les divers composants nécessaires à la mise en œuvre du procédé, ces sachets comprenant au moins un sachet contenant du liège finement divisé et un sachet contenant le liant pour ce liège.

7. Moyens selon la revendication 6, caractérisés en ce qu'ils comprennent séparés l'un de l'autre, d'une part du liège finement broyé de calibre 0,01-0,02-0,03 millimètres dans une proportion en volume de 62,43 % avec adjonction d'alginate pour empreinte dans une proportion en volume de 9,99 % et, d'autre part, de la colle vinylique dans une proportion en volume de 20,38 % additionnée d'eau pour 7,19 % en volume.

8. Moyens selon la revendication 6 ou 7, caractérisés en ce qu'ils comprennent un sachet étanche séparé en deux parties par un clip amovible, et contenant, l'une, le liège finement broyé avec l'alginate pour empreinte, l'autre, le liant vinylique.

## Claims

1. Method for the production of a moulding on a previously glued handle of a tool, in particular a fishing rod, a fire arm, sports equipment or orthopaedic apparatus, using an amalgam formed by a plastifiable product and a binder, which moulding takes place under the pressure of the hand and therefore bears the exact imprint of the hand, characterized in that :

the plastifiable product is finely divided cork which is brought into the presence of a binder and then kneaded,

the cork and binder amalgam obtained in this way is spread on a support to provide a strip whose length is equivalent to that of the moulding,

the glued handle is rolled on the amalgam so that the amalgam is caused to adhere until it coats the handle before the hand is imprinted on the coating.

2. Method as claimed in claim 1, characterized in that alginate for moulding is kneaded as well as the cork and binder.

3. Method as claimed in claim 1 or 2, characterized in that the uniform contact of the amalgam with its support is broken by chopping before the glued handle is rolled on the amalgam.

4. Method as claimed in any one of claims 1 to 3, characterized in that contours such as those of the fingers and the palm of the hand are shaped using the surplus amalgam.

5. Method as claimed in any one of claims 1 to 4, characterized in that the amalgam is glued after drying and dusted with a finishing product.

6. Means for the implementation of the method of claim 1, characterized in that they comprise a kit comprising sachets respectively containing the various components needed to carry out the method, these sachets comprising at least one sachet containing finely divided cork and a sachet containing the binder for this cork.

7. Means as claimed in claim 6, characterized in that they comprise, separated from one another, cork crushed finely to a size of 0.01-0.02-0.03 millimeters in a proportion of 62.43 % by volume with the addition of alginate for moulding in a proportion of 9.99 % by volume and vinyl adhesive in a proportion of 20.38 % by volume with the addition of 7.19 % by volume of water.

8. Means as claimed in claim 6 or 7, characterized in that they comprise a leak-tight sachet separated into two portions by a removable clip, one portion containing the finely crushed cork with the alginate for moulding and the other portion containing the vinyl binder.

## Patentansprüche

1. Verfahren zur Herstellung einer Form auf einem zuvor mit Kleber bestrichenen Handgriff eines Gerätes, insbesondere einer Angelrute, einer Schußwaffe, einem Sportgerät oder einem orthopädischen Gerät unter Verwendung eines Gemisches, das aus einem plastifizierbaren Produkt und einem Bindemittel besteht, wobei die Formung sich unter dem Druck der Hand vollzieht und daher deren Abdruck darstellt, dadurch gekennzeichnet,

daß das plastifizierbare Produkt aus fein zerteiltem Kork besteht, der in Verbindung mit einem Bindemittel gebracht und dann geknetet wird,

daß man die so erhaltene Kork- und Bindemittel-Mischung auf einem Träger zu einer Lage ausbreitet, deren Höhe gleich der des Formteiles ist,

daß man die Mischung durch Abrollen des mit Kleber bestrichenen Handgriffes auf der Mischung auf den Handgriff aufbringt, bis sie ihn ummantelt, bevor man den Abdruck der Hand auf der Ummantelung vornimmt.

2. Verfahren nach Anspruch 1, dadurch gekennzeichnet, daß man zusätzlich zu dem Kork und dem Bindemittel Alginat für den Abdruck einknetet.

3. Verfahren nach Anspruch 1 oder 2, dadurch gekennzeichnet, daß man vor dem Abrollen des mit Kleber versehenen Handgriffes auf der Mischung den gleichmäßigen Kontakt der Mischung mit seinem Träger durch Zerhacken unterbricht.

4. Verfahren nach einem der Ansprüche 1 bis 3, dadurch gekennzeichnet, daß man mit einem Überschuß der Mischung die Konturren, insbesondere der Finger und des Handballens ausformt.

5. Verfahren nach einem der Ansprüche 1 bis 4, dadurch gekennzeichnet, daß man die Mischung nach dem Trocknen mit Kleber versieht und dann ein Endprodukt aufstreut.

6. Mittel zum Durchführen des Verfahrens nach Anspruch 1, dadurch gekennzeichnet, daß sie aus einem Satz mit Beuteln bestehen, in denen die verschiedenen, zur Durchführung des Verfahrens notwendigen Bestandteile untergebracht sind, wobei zumindest ein Beutel mit fein zerteiltem Kork vorhanden ist und ein Beutel mit Bindemittel für den Kork.

7. Mittel nach Anspruch 6, dadurch gekennzeichnet, daß sie getrennt voneinander folgendes enthalten : Einerseits fein zermahlener Kork einer Korngröße von 0,01-0,02-0,03 mm in einem Volumenanteil von 62,43 % mit Beimischung von Alginat für den Abdruck in einem Volumenanteil von 9,99 % und andererseits Vinylkleber in einem Volumenanteil von 20,38 % ergänzt mit Wasser zu einem Volumenanteil von 7,19 %.

8. Mittel nach Anspruch 6 oder 7, dadurch gekennzeichnet, daß sie einen dichten Beutel aufweisen, der durch einen entfernbaren Klip in zwei Abteile geteilt ist und der im einen Abteil den fein zermahlenen Kork mit dem Alginat für den Abdruck, im anderen Abteil das Vinyl-Bindemittel enthält.